Europäisches Patentamt

European Patent Office

Office européen des brevets

(11) Publication number: **0 434 845 A1**

# EUROPEAN PATENT APPLICATION
## published in accordance with Art. 158(3) EPC

(21) Application number: 90910174.3

(51) Int. Cl.⁵: **H02K 9/19**

(22) Date of filing: 06.07.90

(86) International application number:
**PCT/JP90/00865**

(87) International publication number:
**WO 91/01587 (07.02.91 91/04)**

(30) Priority: **19.07.89 JP 184745/89**

(43) Date of publication of application:
**03.07.91 Bulletin 91/27**

(84) Designated Contracting States:
**CH DE FR GB IT LI**

(71) Applicant: **FANUC LTD.**
**3580, Shibokusa Aza-Komanba, Oshino-mura**
**Minamitsuru-gun, Yamanashi 401-05(JP)**

(72) Inventor: **NAKAMURA, K. Fanuc Dai-3**
**Vira-karamatsu 3527-1**
**Shibokusa Oshino-mura Minamitsuru-gun**
**Yamanashi**
**401-05(JP)**

Inventor: **HAYASHI, Yoshiyuki**
**82-12, Subashiri Oyama-cho**
**Sunto-gun Shizuoka 410-14(JP)**
Inventor: **NUMAI, Kazuhisa Fanuc Dai-3**
**Vira-karamatsu**
**3527-1, Shibokusa Oshino-mura**
**Minamitsuru-gun Yamanashi 401-05(JP)**
Inventor: **KIMIJIMA, Masami Fanuc Mansion**
**Harimomi 10-101**
**3533-1, Shibokusa Oshino-mura**
**Minamitsuru-gun Yamanashi 401-05(JP)**

(74) Representative: **Jackson, Peter Arthur et al**
**Gill Jennings & Every, 53-64 Chancery Lane**
**London WC2A 1HN(GB)**

(54) STRUCTURE FOR LIQUID-COOLING OF MOTOR.

(57) For a recent motor requiring larger output and torque, liquid-cooling is preferable for increasing cooling efficiency and, because of simplicity of construction, the so-called jacket system is employed for cooling the stator (17). The conventional jacket system, however, lowers cooling efficiency on account of a cylinder member interposed between the stator (17) and the jacket (18). In this invention, therefore, an adhesive is applied to the entire surface or a partial annular surface area (Z1) of each of laminations (16) composing the stator (17) and, with the laminations assembled, cooling liquid is prevented from entering the inner periphery of the stator (17) and thus a liquid passage (24) of the jacket (18) can be adapted to directly face the outer periphery of the stator (17).

# Fig.1

## LIQUID-COOLING STRUCTURE IN MOTOR

TECHNICAL FIELD

The present invention relates to a jacket type liquid-cooling structure in a motor.

BACKGROUND ART

The recent increasing demands for a motor having a high torque and high power have enhanced the necessity for an effective cooling of a motor, and to provide an effective cooling of a motor, a liquid-cooling system must be employed. A jacket type liquid-cooling system for cooling the outer circumference of the stator of a motor is a simple liquid-cooling system, and generally, the jacket type liquid-cooling system has a liquid coolant circulating groove formed opposite to the outer circumference of the stator, and the liquid coolant circulating groove is separated from the outer circumference of the stator by a cylinder so that the liquid coolant does not leak into the motor.

Preferably, however, the cylinder disposed between the liquid coolant circulating groove and the outer circumference of the stator is eliminated, to thereby improve the cooling performance of the liquid-cooling system.

DISCLOSURE OF THE INVENTION

Accordingly, an object of the present invention is to provide a jacket type liquid-cooling structure capable of solving such a problem and having an enhanced cooling performance.

In view of this object, the present invention provides a liquid-cooling structure in a motor, comprising a stator built up by laminating laminations after applying an adhesive to an annular area in the major surface of each lamination, and a jacket having a liquid coolant circulating groove contiguous to the outer circumference of the stator.

Since the laminations are bonded together by the adhesive applied to the major surfaces thereof, the stator can be directly and efficiently cooled by a liquid coolant flowing through the liquid coolant circulating groove contiguous to the outer circumference of the stator, the liquid coolant cannot leak into the motor, and the stator has a greater strength.

BRIEF DESCRIPTION OF THE DRAWINGS
Figure 1 is a longitudinal sectional view of a motor incorporating a liquid-cooling structure embodying the present invention; and
Figure 2 is a front view of a lamination with an adhesive applied to the major surface thereof in accordance with the present invention.
BEST MODE OF CARRYING OUT THE INVENTION

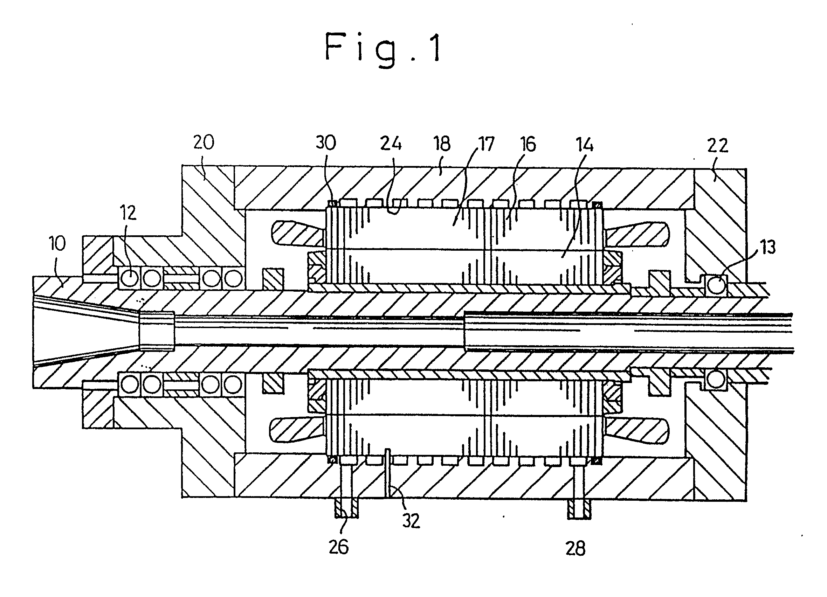

The present invention will be described in further detail with reference to a preferred embodiment shown in the accompanying drawings. Figure 1 is a sectional view of a built-in spindle motor having a rotor 14 directly fixed to the spindle 10 of a machine tool. The spindle 10 is supported for rotation at its front and rear ends by bearings 12 and 13 in a front housing 20 and a rear housing 22, respectively. A cylindrical jacket 18 serving as a middle housing is held between the front housing 20 and the rear housing 22. A helical liquid coolant circulating groove 24 is formed in the inner circumference of the jacket 18. A stator 17 is fastened to the jacket 18 with the outer circumference thereof contiguous to the liquid coolant circulating groove 24 and with a predetermined gap between the rotor 14 and the stator 17. The stator 17 is fastened to the jacket 18 by shrinking-on or with pins after fitting the stator 17 in the jacket 18. The motor shown in Fig. 1 employs the latter method and uses an appropriate number of pins 32 to fasten the stator 17 to the jacket 18.

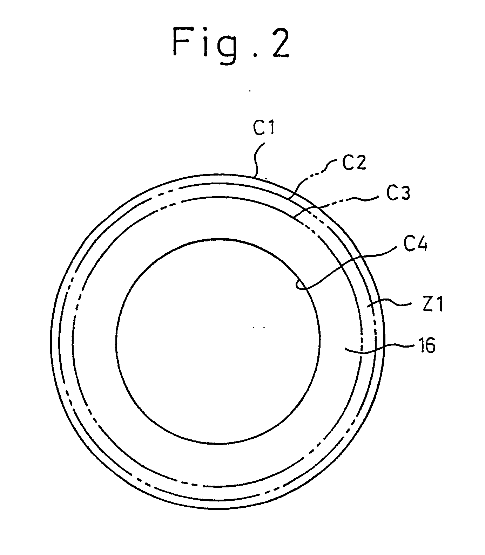

Figure 2 is a front view of one of laminations 16 forming the stator 17. An adhesive is applied to an annular area Z1 between two dotted lines C2 and C3 in the major surface of the lamination 16, between the outer circumference indicated by a line C1 and the inner circumference indicated by a line C4 and near the outer circumference indicated by the line C1. The laminations 16 with the adhesive applied thereto in that manner are laminated to build up the stator 17. Since the outer circumferential portion and inner circumferential portion of the stator 17 are completely isolated from each other by the adhesive applied to the annular areas Z1 in the major surfaces of the laminations 16, a liquid coolant circulated along the outer circumference is unable to penetrate the stator 17. The adhesive may be applied to the major surface of each lamination 16 in an area other than the area Z1, such as an entire area between the lines C1 and C3, an entire area between the lines C1 and C4.

The stator 17 thus formed is attached to the jacket 18 as shown in Fig. 1. The liquid coolant is supplied through an inlet port 26 into the motor. The liquid coolant flows through the helical liquid coolant circulating groove 24 to cool the stator 17, and the liquid coolant is discharged through an outlet port 28 into an external liquid coolant recovery system, not shown, to recover the liquid coolant. The helical liquid coolant circulating groove 24 is sealed by sealing rings 30 provided at the front and rear ends, respectively, of the stator 17 so that the liquid ccolant may not leak from the front or rear end of the stator 17. When shrinking-on is employed in fastening the stator 17 to the jacket 18, each of sealing end plates provided with a sealing ring must be attached respectively to the opposite ends of the stator 17 after fastening the stator 17 to the jacket 18 by shrinking-on, to avoid damaging the sealing ring 30 by the heat of the jacket 18 heated for shrinking-on.

Although the present invention has been described as applied to the built-in spindle motor, the present invention is not limited thereto in practical application and may be applied to motors other than the built-in spindle motor.

The liquid-cooling structure incorporated into the motor of the foregoing construction cools the outer circumference of the stator directly by the liquid coolant and hence has a high cooling performance. The liquid-cooling structure facilitates its application because the same does not allow the cooling liquid to leak into the motor. Furthermore, the stator thus constructed has an enhanced strength.

## LIST OF REFERENCE CHARACTERS

| | |
|---|---|
| 16 | Lamination |
| 17 | Stator |
| 18 | Jacket |
| 24 | Liquid coolant circulating groove |
| Z1 | Annular area coated with adhesive |

## Claims

1. A liquid-cooling structure in a motor, comprising a stator constructed by applying an adhesive to an annular area in the major surface of each of laminations and adhesively laminating the laminations and a jacket provided in an inner circumference thereof with a liquid coolant circulating groove contiguous to the outer circumference of the stator.

2. A liquid-cooling structure in a motor according to claim 1, wherein the entire major surface of each lamination is coated with an adhesive.

# Fig.1

EP 0 434 845 A1

# Fig. 2

# INTERNATIONAL SEARCH REPORT

International Application No PCT/JP90/00865

## I. CLASSIFICATION OF SUBJECT MATTER (if several classification symbols apply, indicate all) ⁶

According to International Patent Classification (IPC) or to both National Classification and IPC

Int. Cl⁵  H02K9/19

## II. FIELDS SEARCHED

Minimum Documentation Searched ⁷

| Classification System | Classification Symbols |
|---|---|
| IPC | H02K9/00, H02K1/00 |

Documentation Searched other than Minimum Documentation
to the Extent that such Documents are Included in the Fields Searched ⁸

| | |
|---|---|
| Jitsuyo Shinan Koho | 1926 - 1990 |
| Kokai Jitsuyo Shinan Koho | 1971 - 1990 |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| X | JP, U, 50-103105 (Hitachi, Ltd.), 26 August 1975 (26. 08. 75), (Family: none) | 1 |
| Y | JP, A, 61-170254 (Fanuc Ltd.), 31 July 1986 (31. 07. 86), (Family: none) | 1 |
| Y | JP, U, 63-70262 (Nissan Motor Co., Ltd.), 11 May 1988 (11. 05. 88), (Family: none) | 1 |
| Y | JP, A, 52-115307 (Toshiba Corp.), 27 September 1977 (27. 09. 77), (Family: none) | 1 |
| Y | JP, A, 60-102827 (Fanuc Ltd.), 7 June 1985 (07. 06. 85), (Family: none) | 1 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| September 18, 1990 (18. 09. 90) | October 8, 1990 (08. 10. 90) |

| International Searching Authority | Signature of Authorized Officer |
|---|---|
| Japanese Patent Office | |

Form PCT ISA 210 (second sheet) (January 1985)